# EUROPÄISCHE PATENTSCHRIFT

(11) **EP 2 010 872 B1**
(45) Veröffentlichungstag und Bekanntmachung des Hinweises auf die Patenterteilung: **29.07.2015**
(21) Anmeldenummer: 07724208.9
(22) Anmeldetag: 12.04.2007
(51) Int. Cl.: G01F 23/296, G01N 29/024

(54) **ULTRASCHALLVORRICHTUNG ZUR MESSUNG DES FÜLLSTANDES EINER FLÜSSIGKEIT IN EINEM BEHÄLTER**
ULTRASOUND DEVICE FOR MEASURING THE LEVEL OF A LIQUID IN A CONTAINER
SYSTÈME ULTRASONORE CONÇU POUR MESURER LE NIVEAU D'UN LIQUIDE DANS UN RÉCIPIENT

(30) Priorität: 12.04.2006 DE 102006017284; 05.04.2007 DE 102007016539
(43) Veröffentlichungstag der Anmeldung: 07.01.2009
(73) Patentinhaber: Seuffer GmbH & Co. KG, 75365 Calw (DE)
(72) Erfinder: ZACHMANN, Wilfried, 75196 Remchingen (DE); HARTMANN, Thomas, 75387 Neubulach (DE)
(74) Vertreter: Winter, Brandl, Fürniss, Hübner, Röss, Kaiser, Polte - Partnerschaft mbB
(86) Internationale Anmeldenummer: PCT/EP2007/003267
(87) Internationale Veröffentlichungsnummer: WO 2007/118677

(56) Entgegenhaltungen:
- WO-A-91/02950
- DE-A1- 10 312 100
- DE-A1- 19 932 344
- US-A- 5 471 872
- US-A1- 2005 284 217

## Beschreibung

Die Erfindung betrifft eine Vorrichtung zur Messung des Füllstandes einer Flüssigkeit in einem Behälter nach dem Oberbegriff des Patentanspruches 1.

Eine derartige Vorrichtung ist aus US 2005/0284217 A1 bekannt. Die bekannte Vorrichtung weist in einem Behälter, in welchem die Flüssigkeit anzuordnen ist, eine Sende-/Empfangseinrichtung auf, welche Ultraschall-Sendeimpulse aussendet und an der Flüssigkeitsoberfläche reflektierte Echoimpulse, welche von den Ultraschall-Sendeimpulsen verursacht werden, empfängt. In einer Auswerteeinrichtung werden die Laufzeiten der Ultraschall-Sendeimpulse und Echosignale in der Flüssigkeit zur Bestimmung des Füllstandes ausgewertet. Bei der bekannten Vorrichtung sind in einem Gehäuse, welches aus zwei zueinander im rechten Winkel abgewinkelten rohrförmigen Gehäuseteilen besteht, an einem Ende des etwa parallel zum Behälterboden verlaufenden Gehäuseteils die Sende-/Empfangseinrichtung und im abgewinkelten Bereich ein Reflektor angeordnet. Der Reflektor lenkt die von der Sende-/Empfangseinrichtung ausgesendeten Ultraschall-Sendeimpulse in einen Winkel um 90° um in Richtung zur Flüssigkeitsoberfläche hin. Die dort reflektierten Echosignale werden vom Reflektor zur Sende-/Empfangseinrichtung zurückreflektiert. Bei der bekannten Vorrichtung wird der Reflektor mit Hilfe einer zusätzlichen Halteeinrichtung im abgewinkelten Gehäusebereich in Position gehalten.

Die Druckschrift DE 199 32 344 A offenbart eine Anordnung zur kontinuierlichen Füllstandmessung in einem Kraftstofftank, wobei in diesem ein im Wesentlichen gradlinig angeordnetes Schallführungsrohr vorgesehen ist. Das Schallführungsrohr steht etwa senkrecht in dem Tank relativ zu der zu erfassenden Oberfläche der Flüssigkeit. An einem unteren Ende des Schallführungsrohrs befindet sich in der Flüssigkeit ein Ultraschallwandler in Form einer Sende- und Empfangseinrichtung. Der Ultraschallwandler ist mit einer Auswerteinrichtung zur Ansteuerung und zur Zuführung von Erfassungsdaten und zum Auswerten dieser Daten verbunden. In dem im Wesentlichen geraden Schallführungsrohr, das mit der zu erfassenden Flüssigkeit in gleicher Höhe wie der Kraftstoffbehälter gefüllt ist, befinden sich an vorbestimmten Stellen Reflektoren zur Erzeugung von Referenzsignalen, und es wird zur ständigen Erfassung des Füllstands eine kontinuierliche Messung innerhalb des Schallführungsrohrs und damit des Kraftstoffbehälters durchgeführt.

Die Druckschrift DE 103 12 100 A1 offenbart eine Vorrichtung zur Messung eines Füllstands einer Flüssigkeit in einem Behälter, wobei Maßnahmen getroffen werden, bei einem sehr niedrigen Füllstand und einer damit verbundenen sehr kurzen Laufzeit mit der Gefahr des Überschneidens der gesendeten und empfangenen Schallimpulse, die Laufzeit zu verlängern, dass diese ausreicht, um den erzeugten ausgehenden Schallimpuls von seinem Echo sicher zu trennen. Hierbei wird in einem unteren Bereich des zu erfassenden Behälters in unmittelbarer Nähe zu dem von außen angesetzten Ultraschallwandler eine winkelförmige Rohranordnung mit einer vorbestimmten Biegung und einstückig ausgebildet vorgesehen, so dass auch bei niedrigen Füllständen über dieses Winkelrohr eine längere Laufzeit der Schallimpulse erreicht wird. Die Schallimpulse werden in einem bogenförmigen Teil des Winkelrohrs sowohl nach oben zu einer zu erfassenden Flüssigkeitsoberfläche als auch zurück zu dem Ultraschallwandler reflektiert. Verschiedene Radien des bogenförmigen Teils des Winkelrohrs können vorgesehen sein.

Die Druckschrift US 5 471 872 A offenbart eine Erfassungseinrichtung für einen Flüssigkeitspegel, wobei eine winkelförmige Anordnung von Rohren vorgesehen ist. Ein vertikaler Teil des rechtwinklig angeordneten Winkelrohrs taucht in die zu messende Flüssigkeit ein und nimmt teilweise diese Flüssigkeit auf, während in einem Bereich der winkelförmigen Rohranordnung außerhalb des Flüssigkeitsstandes die Sende- und Empfangseinrichtung (d.h. der Ultraschallwandler) zum Senden und Empfangen der Ultraschallsignale angeordnet ist. Die außerhalb der Flüssigkeit ausgesendeten Ultraschallsignale werden von einem in dem oberen Bereich der winkelförmigen Rohranordnung über eine Reflektor zum unteren Teil der Rohranordnung reflektiert und werden zu der Flüssigkeitsoberfläche geleitet, worauf nach einer entsprechenden Reflexion und Laufzeit in Abhängigkeit von dem Füllstand der Flüssigkeit auf dem gleichen Weg die Ultraschallsignale zur Empfangseinrichtung zurückgeführt werden. Die Winkelrohranordnung besteht aus zwei geraden Rohrteilen und einem Winkelstück, an welches beide gerade Rohrteile angesetzt sind und in dem die Reflexionseinrichtung angeordnet ist. Die Reflexionseinrichtung umfasst einen Teil der Schallführung von der Flüssigkeitsoberfläche zu dem Schallwandler, sowie einem Bereich, der zur Referenzmessung dienen kann.

Aus der Druckschrift DE 20 2005 009 609 U1 ist des Weiteren ein Füllstandsensor bekannt ist, bei dem in einer Messkammer, die in einen mit Flüssigkeit gefüllten Behälter in vertikaler Richtung eingesetzt wird, entsprechende Öffnungen vorgesehen sind, die das Eindringen der zu messenden Flüssigkeit ermöglichen. An einem unteren Ende der Messkammer sind Ultraschall-Erfassungseinrichtungen (Ultraschall-Sendeempfänger) angeordnet, und über entsprechende Anschlussleitungen ist die Ultraschall-Erfassungseinrichtung mit einer Auswerteeinrichtung verbunden. In der Messkammer kann der Flüssigkeitsstand (Füllstand) erfasst werden, da durch siebartige Öffnungen in der Messkammer der gleiche Füllstand wie in dem zu messenden Behälter vorliegt. Der Füllstandsensor besteht im Wesentlichen aus zwei halbschalenförmigen Profilen, die aneinandergesetzt werden und einen ersten Hohlraum bilden, der die Messkammer darstellt, und einen zweiten Hohlraum bilden, durch den verschiedene Verbindungskabel geführt werden.

Aufgabe der Erfindung ist es, eine Vorrichtung der eingangs genannten Art zu schaffen, welche einen einfachen Einbau von Reflektor und Sende-/Empfangseinrichtung im Gehäuseinneren ermöglicht.

Diese Aufgabe wird erfindungsgemäß durch die Merkmale des Patentanspruches 1 gelöst.

In den Unteransprüchen sind vorteilhafte Weiterbildungen der Erfindung angegeben.

Bei der Erfindung wird in einem bestimmten Abstand zur Sende- und Empfangseinrichtung, welche vorzugsweise als Baueinheit ausgebildet ist, ein Reflektor angeordnet, welcher die Ultraschall-Sendeimpulse in Richtung zur Flüssigkeitsoberfläche reflektiert und die von dort zurückkommenden Echosignale in Richtung zur Empfangseinrichtung zurückleitet. Die Ultraschall-Sendeimpulse werden dabei im wesentlichen parallel zum Behälterboden, insbesondere horizontal ausgesendet. Durch den Reflektor werden die Ultraschall-Sendeimpulse zur Flüssigkeitsoberfläche so umgelenkt, dass sie im wesentlichen im rechten Winkel auf die Flüssigkeitsoberfläche auftreffen. Horizontal ausgesendete Ultraschall-Sendeimpulse werden somit in vertikaler Richtung umgelenkt. Der Reflektor ist vorzugsweise so angeordnet, dass die Ultraschall-Sendeimpulse und die Echosignale im rechten Winkel umgelenkt werden. Mit der erfindungsgemäßen Vorrichtung können auch niedrige Füllstände noch einwandfrei erfasst werden.

Bei einer bevorzugten Anordnung befinden sich die Sende-/Empfangseinrichtung und der Reflektor in unmittelbarer Nähe des Behälterbodens. Die Ultraschall-Sendeimpulse werden dabei im wesentlichen parallel zum Behälterboden zum Reflektor ausgesendet. Der Reflektor ist als eine Ebene, beispielsweise eine aus Metall oder Kunststoff bestehende Fläche ausgebildet, an welcher die Ultraschall-Sendeimpulse reflektiert werden. Vorzugsweise besitzt diese Fläche bzw. der Reflektor gegenüber dem Behälterboden einen Winkel von beispielsweise 45°.

In der Nähe des Behälterbodens ist eine die Ultraschall-Sendeimpulse reflektierende Referenzfläche, welche ebenfalls aus Metall oder Kunststoff gebildet sein kann, in einem bestimmten Abstand zur Sende- und Empfangseinrichtung angeordnet. Die Referenzfläche reflektiert die Ultraschall-Sendeimpulse in zur Einfallsrichtung entgegengesetzten Richtung zur Sende- und Empfangseinrichtung zurück. Die Sende-/Empfangseinrichtung, der Reflektor und die Referenzfläche sind in einem im wesentlichen parallel zum Behälterboden verlaufenden Rohr, welches aus Metall oder Kunststoff bestehen kann, angeordnet.

Die Sende-/Empfangseinrichtung ist am einen Rohrende, welches um die Rohrachse geöffnet ist, angeordnet und der Reflektor sowie die Referenzfläche sind am anderen Rohrende angeordnet. Im Rohrmantel befindet sich im Bereich der Referenzfläche eine Öffnung. An diese Öffnung kann ein zweites Rohr angeschlossen sein. Das zweite Rohr dient, wie das erste parallel zum Behälterboden verlaufende Rohr als Ultraschallleiteinrichtung. Die beiden Rohre sind vorzugsweise im rechten Winkel miteinander zu einem abgewinkelten Rohr einstückig verbunden.

Durch Auswertung der Laufzeiten der Ultraschall-Sendeimpulse von der Sendeeinrichtung bis zur Referenzfläche und der entsprechenden zurückreflektierten Echosignale können physikalische Eigenschaften der Flüssigkeit, insbesondere Dichteunterschiede, Temperaturschwankungen, Konzentrationen von Inhaltsstoffen und dergleichen, welche die Ausbreitungsgeschwindigkeit der Ultraschallwellen in der Flüssigkeit beeinflussen, erfasst werden. Bei der Auswertung der am Reflektor umgelenkten Ultraschall-Sendeimpulse und der dazugehörigen Echosignale werden die aus den Änderungen der physikalischen Eigenschaften der Flüssigkeit resultierenden Verschiebungen bzw. Änderungen der Ausbreitungsgeschwindigkeit der Ultraschallwellen berücksichtigt.

Vorzugsweise ist die Referenzfläche in unmittelbarer Nähe zum Reflektor angeordnet und kann aus einem Stück mit dem Reflektor gebildet sein.

Das Gehäuse besteht aus zwei Halbschalen, die an längs verlaufenden Verbindungsflächen fest miteinander verbunden sind. Die Verbindung kann durch Schweißen, insbesondere Impuls-Schweißen oder durch entlang der Verbindungsflächen verlaufenden ineinander greifenden Rastelementen beispielsweise in Form von Dichtlippen erfolgen. Die Halbschalen sind in Anpassung an das im Wesentlichen aus zwei abgewinkelten Rohstücken bestehende Gehäuse ebenfalls als abgewinkelte Halbschalen ausgebildet. Der Winkel zwischen den rohrförmigen Gehäuseteilen beträgt beispielsweise, wie bei der bekannten Vorrichtung 90°. Es können auch andere geeignete Winkel vorgesehen sein. Bei der Erfindung wird jedoch mit Hilfe der beiden Halbschalen ein durchgehendes selbsttragendes Winkelgehäuse geschaffen. Zusätzliche außen vorgesehene Halteelemente für den Reflektor sind nicht erforderlich. Hierzu sind an den Innenflächen der Halbschalen entsprechende Ausnehmungen gebildet, in die im abgewinkelten Bereich des Gehäuses vor dem Zusammenfügen der beiden Halbschalen der Reflektor beispielsweise durch Einstecken oder Einfügen vormontiert werden kann. Auch für die Sende-/Empfangseinrichtung, welche als wie zur elektrischen Wandlung ausgebildet ist, sind am entsprechenden Ende des etwa parallel zum Gehäuseboden angeordneten Rohrteils an den Innenflächen der beiden Halbschalen entsprechende Ausnehmungen zur Halterung, insbesondere formschlüssigen Halterung der Sende-/Empfangseinrichtung, angeordnet.

Die Bestandteile der Messeinrichtung lassen sich somit einfach ineinander fügen, wobei die Sende-/Empfangseinrichtung und der Reflektor positionsgerecht im Inneren des Gehäuses zunächst vormontiert und beim Zusammenbau und Verbinden der beiden Halbschalen miteinander fest in den gewünschten Positionen vorzugsweise mit Formschluss in den zugeordneten Ausnehmungen im Gehäuseinneren gehalten werden.

In bevorzugter Weise können im Gehäuse zwei parallel zueinander verlaufende Hohlräume gebildet werden. Die beiden Hohlräume sind gegeneinander abgedichtet, wobei mittlere Verbindungsflächen, mit denen die beiden Gehäuseschalen miteinander verbunden sind, eine dichte Trennung der beiden Hohlräume gewährleisten. Der eine Hohlraum dient vorzugsweise zur Schallführung der Ultra-Schallwellen und der andere Hohlraum zur Führung elektrischer Leitungen, die zu einem Kabel miteinander verbunden sein können und die Sende-/Empfangseinrichtung mit einer Stromversorgung und Auswerteeinrichtung verbinden. In diesem anderen Hohlraum können auch elektrische oder elektronische Bauelemente beispielsweise in der Auswerteeinrichtung angeordnet sein.

Anhand der Figuren wird die Erfindung noch näher erläutert.

Es zeigt:
- Fig. 1: in schematischer Darstellung ein erstes Beispiel, das nicht alle Merkmale der Erfindung umfasst;
- Fig. 2: ein zweites Beispiel, das nicht alle Merkmale der Erfindung umfasst;
- Fig. 3: ein drittes Beispiel, das nicht alle Merkmale der Erfindung umfasst;
- Fig. 4: in perspektivischer Darstellung zwei Gehäuseschalen und Einbauteile für ein Ausführungsbeispiel der Erfindung;
- Fig. 5: einen Schnitt durch das Ausführungsbeispiel der Fig. 4;
- Fig. 6: eine perspektivische Darstellung des Gehäuses des Ausführungsbeispiels der Fig. 4; und
- Fig. 7: eine vergrößerte Schnitt-Darstellung des unteren Gehäuseteils des Ausführungsbeispiels der Fig. 4 mit Reflektor und Sende-/Empfangseinrichtung.

Die Figuren zeigen eine in einem Behälter angeordnete Flüssigkeit 6. Vom Behälter ist schematisch ein Behälterboden 4 dargestellt. In unmittelbarer Nähe des Behälterbodens 4 ist eine Sendeeinrichtung 1 vorgesehen, welche Ultraschallwellen im wesentlichen parallel zum Behälterboden 4 aussendet. Ferner ist eine Empfangseinrichtung 2 in unmittelbarer Nähe des Behälterbodens 4 angeordnet, welche von den Ultraschall-Sendeimpulsen der Sendeeinrichtung verursachte Echosignale empfängt. Die Sendeeinrichtung 1 und die Empfangseinrichtung 2 können als Baueinheit, welche einen elektroakustischen Wandler aufweist, ausgebildet sein. In bekannter Weise kann dieser Wandler als piezoelektrische Wandlereinrichtung ausgebildet sein.

An die Sende-/Empfangseinrichtung 1, 2 ist eine Auswerteeinrichtung 8 angeschlossen. In dieser Auswerteeinrichtung 8, welche als elektronische Rechnereinrichtung ausgebildet sein kann, werden die Laufzeiten der Ultraschall-Sendeimpulse und der daraus resultierenden Echosignale zur Bestimmung des Füllstandes der Flüssigkeit 6 im Behälter in bekannter Weise ausgewertet.

Ferner ist in unmittelbarer Nähe des Behälterbodens 5 ein Reflektor 3 angeordnet. Der Reflektor 3 kann von einer Metall- oder Kunststofffläche gebildet werden. Die Metallfläche kann von einem Metallstück oder einer auf eine Unterlage aufgebrachten Metallisierung gebildet werden. Der Reflektor 3 ist so ausgebildet, dass er die von der Sendeeinrichtung 1 ausgesendeten Ultraschall-Sendeimpulse in Richtung zur Flüssigkeitsoberfläche 7 umlenkt. Hierzu weist der Reflektor 3 bzw. die reflektierende Fläche gegenüber dem Behälterboden 4 bzw. der Ausbreitungsrichtung der Ultraschall-Sendeimpulse einen Winkel von etwa 45° auf. Bei horizontaler Anordnung werden die im wesentlichen horizontal ausgesendeten Ultraschall-Sendeimpulse in vertikaler Richtung zur Flüssigkeitsoberfläche 7 umgelenkt. Der Umlenkwinkel beträgt etwa 90°. Der Umlenkwinkel kann hiervon auch abweichen. Die von der Flüssigkeitsoberfläche 7 reflektierten Echosignale, welche von den Ultraschall-Sendeimpulsen verursacht werden, gelangen zur reflektierenden Fläche des Reflektors 3 zurück und werden von dort auf die Empfangseinrichtung 2 gerichtet und dort empfangen. Die Echosignale werden hierbei ebenfalls um etwa 90° umgelenkt. Wie schon erläutert, wird aus den Laufzeiten der Ultraschall-Sendeimpulse und der dazugehörigen Echosignale der Füllstand der Flüssigkeit 6 im Behälter mit Hilfe der an der Sende-/Empfangseinrichtung 1, 2 angeschlossene Auswerteeinrichtung 8 bestimmt. Der Reflektor 3 besitzt hierzu gegenüber der Sende-/Empfangseinrichtung 1, 2 einen bestimmten Abstand.

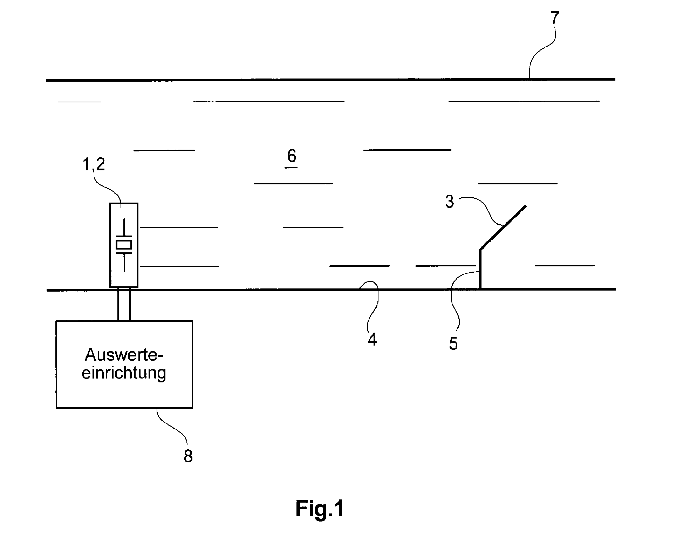

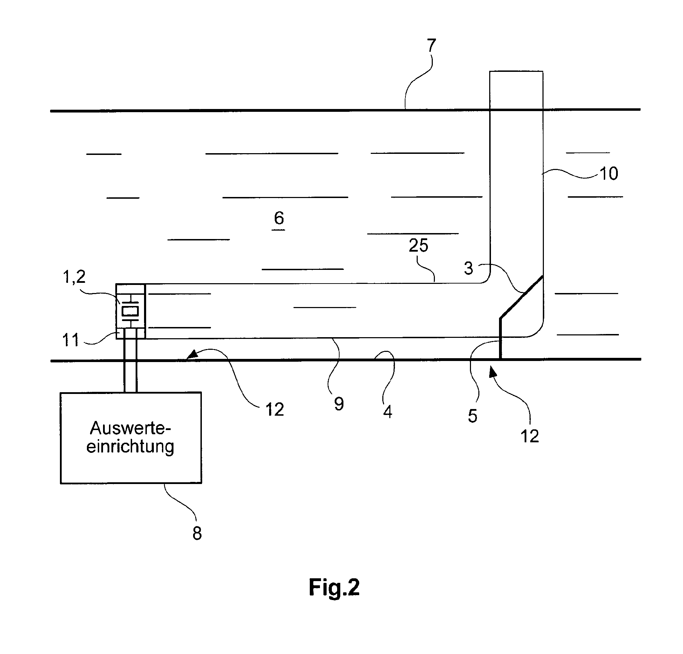

Ferner besitzen die dargestellten Beispiele der Fig. 1 und 2 eine Referenzfläche 5, welche ebenfalls, wie der Reflektor, aus Metall oder Kunststoff bestehen kann und vorzugsweise einstückig mit dem Reflektor 3 ausgebildet ist. Die Referenzfläche 5 besitzt gegenüber der Sende-/Empfangseinrichtung 1, 2 ebenfalls einen vorbestimmten Abstand. An der Referenzfläche 5 werden die von der Sendeeinrichtung 1 im wesentlichen parallel zum Behälterboden 4 ausgesendeten Ultraschall-Sendeimpulse in entgegengesetzter Richtung zur Empfangseinrichtung 2 zurückreflektiert. Aufgrund des vorbestimmten Abstands zwischen der Sende-/Empfangseinrichtung 1, 2 und der Referenzfläche 5 können Änderungen der Ausbreitungsgeschwindigkeit der Ultraschallwellen in der Flüssigkeit 6, welche aus physikalischen Änderungen der Flüssigkeit resultieren, erfasst werden und bei der Bestimmung des Füllstandes der Flüssigkeit 6 im Behälter im Rahmen der Auswertung in der Auswerteeinrichtung 8 berücksichtigt werden. Auf diese Weise erhält man bei der Füllstandsbestimmung eine Kompensation von Dichteunterschieden und Temperaturschwankungen und anderen physikalischen Eigenschaften, welche sich auf die Ausbreitungsgeschwindigkeit der Ultraschallwellen in der Flüssigkeit 6 auswirken. Die Referenzfläche 5 ist vorzugsweise als ebene Fläche ausgebildet und erstreckt sich senkrecht zum Behälterboden 4 bzw. zur Ausbreitungsrichtung der Ultraschall-Sendeimpulse.

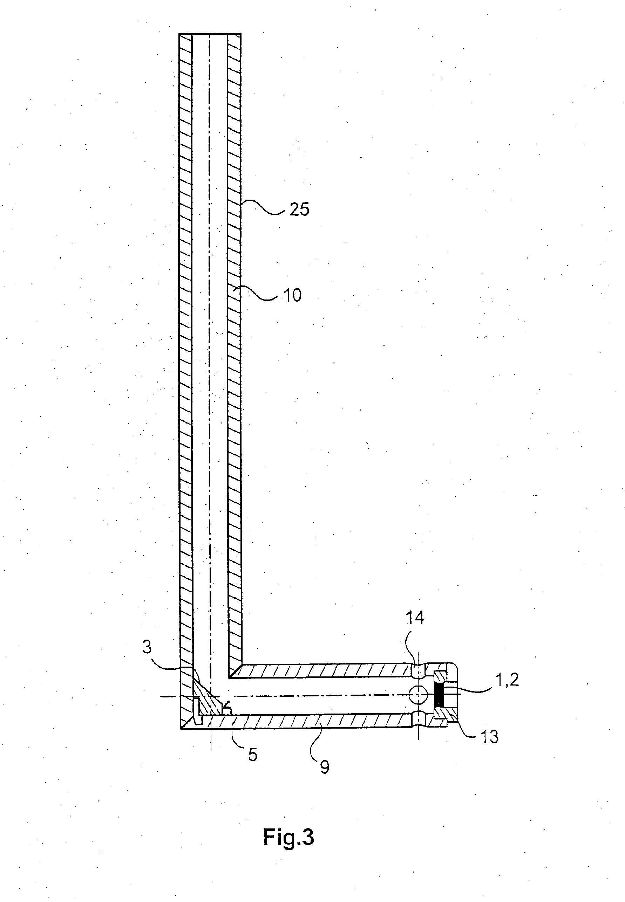

Bei dem zweiten Beispiel, das in Fig. 2 zu sehen ist, sind die Sende-/Empfangseinrichtung 1, 2, der Reflektor 3 und die Referenzfläche 5 in einem im wesentlichen parallel zum Behälterboden 4 verlaufenden Rohr 9 angeordnet. Die Sende-/Empfangseinrichtung 1, 2 befindet sich an einem um die Rohrachse offenen Ende des Rohres 9 und wird mit flüssigkeitsdurchlässigen Abstandhaltern 11 im Abstand von der Rohrinnenwand gehalten. Auf diese Weise ist es möglich, dass Flüssigkeit in das Rohrinnere gelangt. Das Rohr 9 kann jedoch in seiner Rohrwandung Öffnungen 14 aufweisen, wie es in Fig. 3 gezeigt ist, damit Flüssigkeit in das Rohrinnere gelangt. Am anderen Ende des Rohres 9 sind der Reflektor 3 und die Referenzfläche 5, welche aus einem Stück bestehen können, angeordnet. Über der Referenzfläche 5 ist das Rohr 9 in Richtung zur Flüssigkeitsoberfläche 7 hin geöffnet. Bei den dargestellten Ausführungsbeispielen der

Fig. 2 und 3 ist um die Öffnung im Rohr 9 ein weiteres Rohr 10 angeordnet. Vorzugsweise ist das Rohr 10 mit dem Rohr 9 einstückig zu einem abgewinkelten Rohr verbunden. Der Flüssigkeitspegel im Rohr 10 entspricht dem Flüssigkeitspegel im Behälter. Bei den Ausführungsbeispielen der Fig. 2 und 3 wird für eine verbesserte Füllstandsmessung eine Beruhigung der Flüssigkeit, welche sich in den Rohren 9 und 10 befindet, erreicht. Der Reflektor 3 und die Referenzfläche 5 sind in dem abgewinkelten Bereich der beiden Rohre 9 und 10 angeordnet. Die Befestigung des Rohres 9 kann mit Hilfe von Befestigungsmitteln 12, welche, wie in der Fig. 2 dargestellt ist, an bestimmten Stellen eine Verbindung zwischen dem Behälterboden 4 und dem Rohr 9. herstellen, erfolgen. Es ist jedoch auch möglich, eine Befestigungsschicht zwischen dem Rohr 9 und dem Behälterboden 4 zu verwenden. Der Abstand zwischen dem Rohr 9 und dem Behälterboden 4 wird möglichst gering bemessen, um auch niedrige Füllstände im Behälter erfassen zu können. Die Länge des Rohres 10 wird in Abhängigkeit von den im Behälter zu erfassenden Flüssigkeitspegeln bemessen und kann wesentlich größer sein als die Länge des Rohres 9, wie Fig. 3 zeigt.

Die Sende-/Empfangseinrichtung 1, 2 kann am offenen Ende des Rohres 9 mit Hilfe von Abstandhaltern 11 im Abstand von der Rohrinnenwand gehalten werden, so dass Flüssigkeit 6 auch in das Rohrinnere gelangen kann. Bei dem Ausführungsbeispiel der Fig. 3 wird die Sende-/Empfangseinrichtung 1, 2 von einem ringförmigen Halter 13 am Rohrende gehalten und dahinter sind im Rohr 9 die Öffnungen 14 vorgesehen. Die Rohre 9, 10 sind ultraschallleitend ausgebildet.

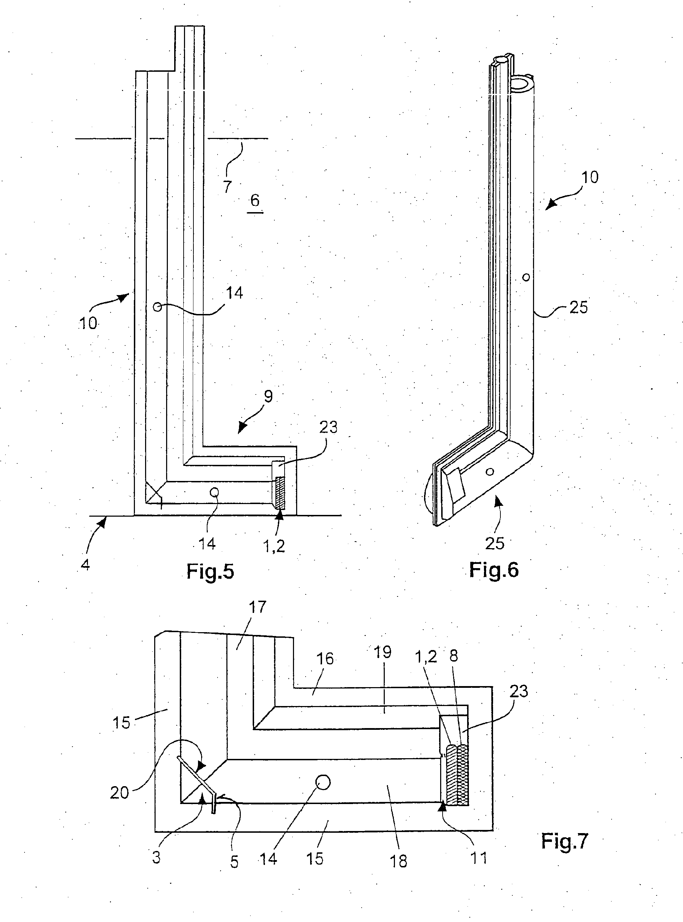

Die Figur 1 zeigt eine in einem Behälter angeordnete Flüssigkeit 6. Vom Behälter ist schematisch ein Behälterboden 4 dargestellt. In unmittelbarer Nähe des Behälterbodens 4 ist eine Sendeeinrichtung 1 vorgesehen, welche Ultraschallwellen im wesentlichen parallel zum Behälterboden 4 aussendet. Ferner ist eine Empfangseinrichtung 2 in unmittelbarer Nähe des Behälterbodens 4 angeordnet, welche von den Ultraschall-Sendeimpulsen der Sendeeinrichtung verursachte Echosignale empfängt. Die Sendeeinrichtung 1 und die Empfangseinrichtung 2 können als Baueinheit, welche einen elektroakustischen Wandler aufweist, ausgebildet sein. In bekannter Weise kann dieser Wandler als piezoelektrische Wandlereinrichtung ausgebildet sein. Mittels einem Dämpfungs-/Federelement 8 ist die Wandlereinrichtung gegen eine Gehäusewand abgestützt (Fig. 7).

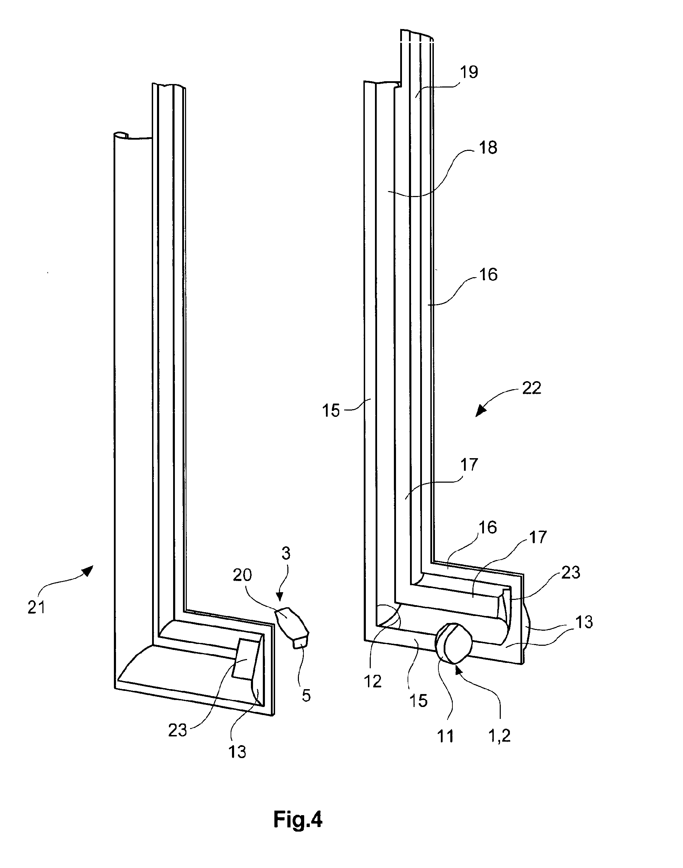

Wie aus den Fig. 4 bis 7 zu ersehen ist, besteht das abgewinkelte, rohrförmige Gehäuse 25 aus zwei Halbschalen 21 und 22. In diese Halbschalen 21 und 22 sind die jeweiligen Rohrhälften eingeformt. Beim dargestellten Ausführungsbeispiel werden im rohrförmigen Gehäuse 25 abgewinkelte Hohlräume 18 und 19 gebildet. Es ist jedoch auch möglich, das rohrförmige Gehäuse 25 so auszugestalten, dass nur der abgewinkelte Hohlraum 18 gebildet ist, wie unten erläutert, in dem die Sende-/Empfangseinrichtung 1, 2 und der Reflektor 3 angeordnet sind. Im abgewinkelten Hohlraum 18 erfolgt im Wesentlichen die Führung der für die Messung zu verwendenden Ultraschallwellen, wie oben erläutert wurde.

Beim dargestellten Ausführungsbeispiel wird in den beiden von den Rohren 9, 10 gebildeten abgewinkelten Gehäuseteilen ein zusätzlicher entsprechend abgewinkelter Hohlraum 19 gebildet, welcher als Kabelkanal für elektrische Leitungen, welche die elektrische Verbindung zwischen der Sende-/Empfangseinrichtung 1, 2 und der nicht näher dargestellten Auswerteeinrichtung, welche außerhalb des Behälters liegen kann, herstellen.

Die beiden Halbschalen 21 und 22 werden an Verbindungsflächen 15, 16 und 17 dicht, insbesondere flüssigkeitsdicht, miteinander verbunden. Vorzugsweise erfolgt die Verbindung durch Schweißen, insbesondere Laserschweißen. Die Verbindungsflächen 15, 16 und 17 haben ebenfalls einen abgewinkelten der abgewinkelten Rohrform des Gehäuses 25 angepassten Verlauf. Durch die zwischen den jeweils beiden Verbindungsflächen 15, 16 liegenden Verbindungsflächen 17 an den Halbschalen 21 und 22 wird nach deren Zusammenfügen die flüssigkeitsdichte Trennung zwischen den beiden abgewinkelten Hohlräumen 18 und 19 erreicht.

Im Hohlraum 18 sind im abgewinkelten Bereich an den Innenflächen, welche den Hohlraum 18 umschließen, Ausnehmungen 12 an den Halbschalen 21, 22 vorgesehen. Diese Ausnehmungen 12 gewährleisten eine Vormontage des Reflektors 3 vor dem Zusammenfügen der beiden Halbschalen 21 und 22. Ferner sind am anderen Ende des einen Rohres 9 des Gehäuses 25 Ausnehmungen 13 in den beiden Halbschalen 21, 22 vorgesehen, welche eine Vormontage der Sende-/Empfangseinrichtung 1, 2 ermöglichen. Die Ausnehmungen 13 sind so gestaltet, dass ein Dämpfungs-/Federelement 8 der piezoelektrische Wandler der Sende-/Empfangseinrichtung 1, 2 und eine diese Anordnung gegenüber dem Hohlraum 18 flüssigkeitsdicht abdichtende, umlaufende Dichtung 11 angeordnet werden können. Nach dem Zusammenbau der beiden Halbschalen 21 und 22 wird diese Anordnung lagesicher gegenüber dem Reflektor 3 positioniert. Durch die im Gehäuseinneren vorgesehenen Ausnehmungen ist nicht nur eine Vormontage der angesprochenen Bauteile an den Halbschalen 21 und 22 möglich, sondern nach deren Zusammenbau wird gewährleistet, dass der Reflektor 3 und die daran vorgesehen Flächen, insbesondere die reflektierende, umlenkende Fläche 20 und die Referenzfläche 5, die vorgeschriebene Position gegenüber dem piezoelektrischen Wandler in der Sende-/Empfangseinrichtung 1, 2 einnehmen.

Der Reflektor 3 mit der umlenkenden, reflektierenden Fläche 20 und der Referenzfläche 5 wird aus einem Stück, insbesondere einem flachen, abgewinkelten Stück gebildet. Dieses kann als Blech ausgebildet sein und formschlüssig in entsprechenden Schlitzen an der Innenwand des Hohlraumes 18 des abgewinkelten Gehäuses 25 positionsgerecht gehalten werden. Die umlenkende, reflektierende Fläche 20 und die Referenzfläche befinden sich auf abgewinkelten Teilen des als flaches abgewinkeltes Stück ausgebildeten Reflektors und verlaufen in einem Winkel von 225° gegeneinander.

In zusätzlichen Ausnehmungen 23 an den Innenseiten der beiden Halbschalen 21 und 22 wird Raum geschaffen für eine elektrische Anschlusseinrichtung, mit welcher die elektrischen Leitungen, welche im Hohlraum 19 geführt werden, an die Sende-/Empfangseinrichtung 1, 2 angeschlossen werden können. Es handelt sich hier um Stromversorgungsleitungen und Messsignal führende Leitungen. Durch die ringförmige Dichtung 11 ist der Hohlraum 18 flüssigkeitsdicht gegenüber der Ausnehmung 23 und dem Hohlraum 19 zusätzlich abgedichtet.

Die elektrischen Leitungen können vor dem Zusammenbau der beiden Halbschalen 21 und 22 im Hohlraum 19 verlegt und in der jeweiligen Ausnehmung 23 der Halbschale an die elektrische Sende-/Empfangseinrichtung 1,2, insbesondere den piezoelektrischen Wandler vor dem Zusammenbau angeschlossen werden. Wie oben erläutert, ergibt sich hieraus eine erleichterte Montage der gesamten Messeinrichtung.

Öffnungen 14 im Hohlraum 18, welche in beiden Rohren 9 und 10 des Gehäuses 25 vorgesehen sein können, sorgen dafür, dass im Hohlraum 18 Flüssigkeit 6 vorhanden ist. Wie insbesondere aus der Figur 7 zu ersehen ist, wird der die zur elektrische Wandler der Sende-/Empfangseinrichtung 1, 2 mittels des Dämpfungs-/Federelements 8 gegenüber der abschließenden Gehäusewand des einen Rohres 9 abgestützt. Auf diese Weise wird eine einwandfreie Erzeugung der erforderlichen Schallwellen-Sendeimpulse und auch ein einwandfreier Empfang der Echosignale bzw. der Referenzsignale, welche von der Referenzfläche 9 kommen, erreicht.

Bei dem in den Ausführungsbeispielen erwähnten Behälter kann es sich um einen mobilen, beispielsweise in einem Fahrzeug angeordneten Tank handeln, in welchem Kraftstoff für eine Verbrennungskraftmaschine oder eine andere Flüssigkeit, beispielsweise Harnstoff untergebracht ist. Selbstverständlich kann der Behälter auch ein stationärer Flüssigkeitsbehälter oder Tank sein.

### Bezugszeichenliste:

- 1: Sendeeinrichtung
- 2: Empfangseinrichtung
- 3: Reflektor
- 4: Behälterboden
- 5: Referenzfläche
- 6: Flüssigkeit
- 7: Flüssigkeitsoberfläche
- 8: Dämpfungs-/Federelement
- 9: Rohr
- 10: Rohr
- 11: Dichtung
- 12: Ausnehmungen für Reflektor
- 13: Ausnehmungen für Sende-/Empfangseinrichtung
- 14: Öffnungen
- 15: Verbindungsfläche
- 16: Verbindungsfläche
- 17: Verbindungsfläche
- 18: Hohlraum
- 19: Hohlraum (Kabelkanal)
- 20: umlenkende, reflektierende Fläche
- 21: Halbschale
- 22: Halbschale
- 23: Ausnehmung für Kabelanschluss
- 25: Gehäuse

## Patentansprüche

1. Vorrichtung zur Messung des Füllstands einer Flüssigkeit in einem Behälter mit einer Sensoreinrichtung, welche Ultraschall-Sendeimpulse aussendet, einer Empfangseinrichtung, welche die an der Flüssigkeitsoberfläche reflektierten Echosignale empfängt, und einer Auswerteeinrichtung, welche die Laufzeiten der Ultraschall-Sendeimpulse und Echosignale auswertet, wobei in einem vorbestimmten Abstand zur Sende-/Empfangseinrichtung (1, 2) ein Reflektor (3) angeordnet ist, der die Ultraschall-Sendeimpulse in Richtung zur Flüssigkeitsoberfläche reflektiert und ferner die von der Flüssigkeitsoberfläche kommenden Echosignale in Richtung zur Empfangseinrichtung (2) reflektiert,
wobei
die Sende-/Empfangseinrichtung (1, 2) und der Reflektor (3) in der Nähe des Behälterbodens (4) angeordnet sind und die Richtung der zum Reflektor (3) ausgesendeten Ultraschall-Sendeimpulse und die Richtung der vom Reflektor (3) reflektierten Echosignale im Wesentlichen parallel zum Behälterboden (4) verlaufen, und
wobei in der Nähe des Behälterbodens (4) eine Referenzfläche (5), welche
die Ultraschall-Sendeimpulse in einer zur Einfallsrichtung entgegengesetzten Richtung reflektiert, in einem bestimmten Abstand zur Sende-/Empfangseinrichtung (1, 2) angeordnet ist,
wobei die Sende-/Empfangseinrichtung (1, 2), der Reflektor (3) und die Referenzfläche (5) in einem im Wesentlichen parallel zum Behälterboden (4) verlaufenden Rohr (9), welches im Bereich des Reflektors (3) in Richtung zur Flüssigkeitsoberfläche (7) hin offen ist, angeordnet sind und das parallel zum Behälterboden (4) verlaufende Rohr (9) an seiner Öffnung mit einem weiteren im Winkel angeordneten Rohr (10) fest verbunden ist,
**dadurch gekennzeichnet,**
**dass** die Rohre (9, 10) ein rohrförmiges Gehäuse (25) bilden, das aus zwei Halbschalen (21, 22) mit jeweiliger Längsausdehnung der Rohre (9, 10) besteht, wobei die beiden Halbschalen (21, 22) an längs verlaufenden Verbindungsflächen (15, 16, 17) fest miteinander verbunden sind und in den beiden Halbschalen (21, 22) jeweils Ausnehmungen (12, 13) vorgesehen sind zur Vormontage des Reflektors (3) und der Sende-/Empfangseinrichtung (1,2).

2. Vorrichtung nach Anspruch 1, **dadurch gekennzeichnet, dass** der Reflektor (3) gegenüber dem Behälterboden (4) einen Winkel von etwa 45° aufweist.

3. Vorrichtung nach Anspruch 1 oder 2, **dadurch gekennzeichnet, dass** die Referenzfläche (5) in unmittelbarer Nähe zum Reflektor (3) angeordnet ist.

4. Vorrichtung nach einem der Ansprüche 1 bis 3, **dadurch gekennzeichnet, dass** der Reflektor (3) und die Referenzfläche (5) aus einem Stück gebildet sind.

5. Vorrichtung nach einem der Ansprüche 1 bis 4, **dadurch gekennzeichnet, dass** der Reflektor (3) und die Referenzfläche (5) an einem flachen abgewinkelten Stück, insbesondere Blech gebildet sind.

6. Vorrichtung nach einem der Ansprüche 1 bis 5, **dadurch gekennzeichnet, dass** der Reflektor (3) und die Referenzfläche (5) etwa gleiche Breite aufweisen.

7. Vorrichtung nach einem der Ansprüche 1 bis 6, **dadurch gekennzeichnet, dass** der Reflektor (3) eine Metalloberfläche aufweist.

8. Vorrichtung nach einem der Ansprüche 1 bis 7, **dadurch gekennzeichnet, dass** die Referenzfläche (5) von einer Metallfläche gebildet ist.

9. Vorrichtung nach einem der Ansprüche 1-8, **dadurch gekennzeichnet, dass** die beiden Rohre (9, 10) als abgewinkeltes Rohr aus einem Stück bestehen.

10. Vorrichtung nach einem der Ansprüche 1-9, Z **dadurch gekennzeichnet, dass** der Winkel zwischen den beiden Rohren (9, 10) etwa ein rechter Winkel ist.

11. Vorrichtung nach einem der Ansprüche 1-10, **dadurch gekennzeichnet, dass** die Rohre (9, 10) aus Kunststoff bestehen.

12. Vorrichtung nach einem der Ansprüche 1-11, **dadurch gekennzeichnet, dass** der Reflektor (3) und die Referenzfläche (5) im Bereich der Abwinkelung der beiden Rohre (9, 10) angeordnet sind.

13. Vorrichtung nach einem der Ansprüche 1-12, **dadurch gekennzeichnet, dass** die Sende-/Empfangseinrichtung (1, 2) am offenen Ende des parallel zum Behälterboden (4) verlaufenden Rohres (9) angeordnet ist.

14. Vorrichtung nach einem der Ansprüche 4 bis 12, **dadurch gekennzeichnet, dass** die Echosignale der Referenzfläche. (5) zur Bestimmung der Beschaffenheit der Flüssigkeit ausgewertet werden.

15. Vorrichtung nach einem der Ansprüche 1 bis 14, **dadurch gekennzeichnet, dass** die Rohre (9, 10) ultraschallleitend ausgebildet sind.

16. Vorrichtung nach Anspruch 1, **dadurch gekennzeichnet, dass** das Gehäuse (25) aus zwei abgewinkelten Halbschalen (21, 22) besteht.

17. Vorrichtung nach Anspruch 1 oder 16 **dadurch gekennzeichnet, dass** im Gehäuse (25) zwei parallele in Gehäuselängsausdehnung verlaufende Hohlräume (18, 19) gebildet sind.

18. Vorrichtung nach Anspruch 17, **dadurch gekennzeichnet, dass** der eine Hohlraum (18) im Wesentlichen zur Schallführung und der andere Hohlraum (19) zur Führung elektrischer Leitungen dienen.

19. Vorrichtung nach einem der Ansprüche 1 bis 18, **dadurch gekennzeichnet, dass** das Gehäuse (25) als abgewinkeltes Gehäuse ausgebildet ist und der Reflektor (3) im abgewinkelten Gehäuseteil angeordnet ist.

20. Vorrichtung nach einem der Ansprüche 1 bis 19, **dadurch gekennzeichnet, dass** das Gehäuse (25) um 90° abgewinkelt ist.

21. Vorrichtung nach einem der Ansprüche 1 bis 20, **dadurch gekennzeichnet, dass** das eine Rohr (9) des Gehäuses (25) etwa parallel zum Behälterboden (4) anzuordnen ist und das andere Rohr (10) des Gehäuses (25) etwa senkrecht dazu verläuft.

22. Vorrichtung nach einem der Ansprüche 1 bis 21, **dadurch gekennzeichnet, dass** am Reflektor (3) eine die jeweilige Ausbreitungsrichtung der Ultraschall-Sendeimpulse und Echosignale in einem Winkel von 90° umlenkende reflektierende Fläche (20) aufweist.

23. Vorrichtung nach einem der Ansprüche 1 bis 22, **dadurch gekennzeichnet, dass** die auf die Referenzfläche (5) gerichteten und von dort zurückreflektierten Ultraschallwellen eine zum Behälterboden (4) etwa parallele Ausbreitungsrichtung haben.

24. Vorrichtung nach einem der Ansprüche 1 bis 23, **dadurch gekennzeichnet, dass** die Echosignale der Referenzfläche (5) zur Bestimmung der Beschaffenheit der Flüssigkeit ausgewertet werden.

25. Vorrichtung nach einem der Ansprüche 1-24, **dadurch gekennzeichnet, dass** die beiden Halbschalen (21, 22) an den Verbindungsflächen durch Schweißen, insbesondere Laserschweißen, miteinander verbunden sind.

26. Vorrichtung nach einem der Ansprüche 1-25, **dadurch gekennzeichnet, dass** die beiden Halbschalen (21, 22) mittels dichtend ineinander greifenden an den Verbindungsflächen (15, 16, 17) längs verlaufende Rastmittel miteinander verbunden sind.

27. Vorrichtung nach einem der Ansprüche 1 bis 25, **dadurch gekennzeichnet, dass** der Reflektor (3) und die Referenzfläche (5) mit Formschluss an der Innenwand des Hohlraums (18) im Gehäuse gehalten ist.

## Claims

1. Apparatus for measuring the level of a liquid in a container comprising a sensor device which emits ultrasound transmission pulses, a receiver device which receives the echo signals reflected on the liquid surface, and an evaluation device which evaluates the transit times of the ultrasound transmission pulses and echo signals, and a reflector (3) is disposed at a predefined distance from the transmitter/receiver system (1, 2) which reflects the ultrasound transmission pulses in the direction towards the liquid surface and also reflects the echo signals coming from the liquid surface in the direction towards the receiver device (2),
and
the transmitter/receiver system (1, 2) and the reflector (3) are disposed in the vicinity of the container base (4) and the direction of the ultrasound transmission pulses emitted in the direction towards the reflector (3) and the direction of the echo signals reflected by the reflector (3) extend essentially parallel with the container base (4), and
a reference surface (5) which reflects the ultrasound transmission pulses in a direction opposite the direction of incidence is disposed in the vicinity of the container base (4) at a specific distance from the transmitter/receiver system (1, 2),
the transmitter/receiver system (1, 2), reflector (3) and reference surface (5) being disposed in a tube (9) extending essentially parallel with the container floor (4) which is open in the direction towards the liquid surface (7) in the region of the reflector (3), and the tube (9) extending parallel with the container base (4) is fixedly connected at its opening to another tube (10) disposed at an angle, **characterised in that**
the tubes (9, 10) form a tubular housing (25) comprising two half-shells (21, 22) having a respective longitudinal extension of the tubes (9, 10), and the two half-shells (21, 22) are fixedly connected to one another at longitudinally extending connecting surfaces (15, 16, 17), and recesses (12, 13) for pre-assembling the reflector (3) and transmitter/receiver system (1, 2) are provided respectively in the two half-shells (21, 22).

2. Apparatus as claimed in claim 1, **characterised in that** the reflector (3) subtends an angle of approximately 45° with the container base (4).

3. Apparatus as claimed in claim 1 or 2, **characterised in that** the reference surface (5) is disposed in the immediate vicinity of the reflector (3).

4. Apparatus as claimed in one of claims 1 to 3, **characterised in that** the reflector (3) and the reference surface (5) are formed from one piece.

5. Apparatus as claimed in one of claims 1 to 4, **characterised in that** the reflector (3) and the reference surface (5) are formed on a flat angled piece, in particular sheet metal.

6. Apparatus as claimed in one of claims 1 to 5, **characterised in that** the reflector (3) and the reference surface (5) are of approximately equal width.

7. Apparatus as claimed in one of claims 1 to 6, **characterised in that** the reflector (3) has a metal surface.

8. Apparatus as claimed in one of claims 1 to 7, **characterised in that** the reference surface (5) is formed by a metal surface.

9. Apparatus as claimed in one of claims 1 - 8, **characterised in that** the two tubes (9, 10) comprise an angled tube of one piece.

10. Apparatus as claimed in one of claims 1 - 9, **characterised in that** the angle between the two tubes (9, 10) is approximately a right angle.

11. Apparatus as claimed in one of claims 1 - 10, **characterised in that** the tubes (9, 10) are made from plastic.

12. Apparatus as claimed in one of claims 1 - 11, **characterised in that** the reflector (3) and the reference surface (5) are disposed in the region of the angled configuration of the two tubes (9, 10).

13. Apparatus as claimed in one of claims 1 - 12, **characterised in that** the transmitter/receiver system (1, 2) is disposed at the open end of the tube (9) extending parallel with the container base (4).

14. Apparatus as claimed in one of claims 4 to 12, **characterised in that** the echo signals of the reference surface (5) are evaluated in order to determine the nature of the liquid.

15. Apparatus as claimed in one of claims 1 to 14, **characterised in that** the tubes (9, 10) are of an ultrasound conducting design.

16. Apparatus as claimed in claim 1, **characterised in that** the housing (25) comprises two angled half-shells (21, 22).

17. Apparatus as claimed in claim 1 or 16, **characterised in that** two cavities (18, 19) are formed in the housing (25) extending parallel in the housing longitudinal extension.

18. Apparatus as claimed in claim 17, **characterised in that** one cavity (18) is essentially used to direct sound and the other cavity (19) for running electric wires.

19. Apparatus as claimed in one of claims 1 to 18, **characterised in that** the housing (25) is configured as an angled housing and the reflector (3) is disposed in the angled housing part.

20. Apparatus as claimed in one of claims 1 to 19, **characterised in that** the housing (25) is angled by 90°.

21. Apparatus as claimed in one of claims 1 to 20, **characterised in that** one tube (9) of the housing (25) is disposed approximately parallel with the container base (4) and the other tube (10) of the housing (25) extends approximately perpendicular thereto.

22. Apparatus as claimed in one of claims 1 to 21, **characterised in that** the reflector (3) has a reflecting surface (20) deflecting the respective direction of propagation of the ultrasound transmission pulses and echo signals at an angle of 90°.

23. Apparatus as claimed in one of claims 1 to 22, **characterised in that** the ultrasound waves directed onto the reference surface (5) and reflected back from there have a direction of propagation approximately parallel with the container base (4).

24. Apparatus as claimed in one of claims 1 to 23, **characterised in that** the echo signals of the reference surface (5) are evaluated in order to determine the nature of the liquid.

25. Apparatus as claimed in one of claims 1 - 24, **characterised in that** the two half-shells (21, 22) are connected to one another at the connecting surfaces by welding, in particular laser welding.

26. Apparatus as claimed in one of claims 1 - 25, **characterised in that** the two half-shells (21, 22) are connected to one another by means of longitudinally extending latching means locating in one another in a sealing arrangement at the connecting surfaces (15, 16, 17).

27. Apparatus as claimed in one of claims 1 to 25, **characterised in that** the reflector (3) and reference surface (5) are retained in the housing by a positively locking arrangement on the internal wall of the cavity (18).

## Revendications

1. Dispositif de mesure du niveau d'un liquide dans un récipient avec un système de capteur qui émet des impulsions d'émission ultrasonores, un système de réception qui reçoit les signaux d'écho réfléchis sur la surface de liquide, et un système d'évaluation qui évalue les temps de propagation des impulsions d'émission ultrasonores et des signaux d'écho, un réflecteur (3) étant agencé à une distance prédéterminée par rapport au système d'émission/réception (1, 2), lequel réflecteur réfléchit les impulsions d'émission ultrasonores en direction de la surface de liquide et réfléchit de plus les signaux d'écho venant de la surface de liquide en direction du système de réception (32),
le système d'émission/réception (1, 2) et le réflecteur (3) étant agencés à proximité du fond de récipient (4) et la direction des impulsions d'émission ultrasonores émises vers le réflecteur (3) et la direction des signaux d'écho réfléchis par le réflecteur (3) s'étendant sensiblement parallèlement au fond de récipient (4),
et
une surface de référence (5), qui réfléchit les impulsions d'émission ultrasonores dans une direction opposée à la direction d'incidence, étant agencée à proximité du fond de récipient (4) à une distance déterminée par rapport au système d' émission/réception (1, 2),
le système d'émission/réception (1, 2), le réflecteur (3) et la surface de référence (5) étant agencés dans un tube (9) qui s'étend sensiblement parallèlement au fond de récipient (4) et qui est ouvert dans la zone du réflecteur (3) en direction de la surface de liquide (7) et le tube (9) s'étendant parallèlement au fond de récipient (4) étant fixement relié sur son ouverture à un autre tube (10) agencé en angle,
**caractérisé en ce que**
les tubes (9, 10) forment un boîtier tubulaire (25) qui se compose de deux demi-coques (21, 22) avec une extension longitudinale respective des tubes (9, 10), les deux demi-coques (21, 22) étant fixement reliées entre elles sur des surfaces de liaison (15, 16, 17) s'étendant en longueur et respectivement des évidements (12, 13) étant prévus dans les deux demi-coques (21, 22) pour le prémontage du réflecteur (3) et du système d'émission/réception (1, 2).

2. Dispositif selon la revendication 1, **caractérisé en ce que** le réflecteur (3) présente un angle d'environ 45° par rapport au fond de récipient (4).

3. Dispositif selon la revendication 1 ou 2, **caractérisé en ce que** la surface de référence (5) est agencée à proximité directe du réflecteur (3).

4. Dispositif selon l'une quelconque des revendications 1 à 3, **caractérisé en ce que** le réflecteur (3) et la surface de référence (5) sont formés d'une pièce.

5. Dispositif selon l'une quelconque des revendications 1 à 4, **caractérisé en ce que** le réflecteur (3) et la surface de référence (5) sont formés sur une pièce coudée plate, en particulier une tôle.

6. Dispositif selon l'une quelconque des revendications 1 à 5, **caractérisé en ce que** le réflecteur (3) et la surface de référence (5) présentent à peu près la même largeur.

7. Dispositif selon l'une quelconque des revendications 1 à 6, **caractérisé en ce que** le réflecteur (3) présente une surface métallique.

8. Dispositif selon l'une quelconque des revendications 1 à 7, **caractérisé en ce que** la surface de référence (5) est formée d'une surface métallique.

9. Dispositif selon l'une quelconque des revendications 1 à 8, **caractérisé en ce que** les deux tubes (9, 10) se composent comme un tube coudé d'une pièce.

10. Dispositif selon l'une quelconque des revendications 1 à 9, **caractérisé en ce que** l'angle entre les deux tubes (9, 10) est à peu près un angle droit.

11. Dispositif selon l'une quelconque des revendications 1 à 10, **caractérisé en ce que** les tubes (9, 10) se composent de matière plastique.

12. Dispositif selon l'une quelconque des revendications 1 à 11, **caractérisé en ce que** le réflecteur (3) et la surface de référence (5) sont agencés dans la zone du coudage des deux tubes (9,10).

13. Dispositif selon l'une quelconque des revendications 1 à 12, **caractérisé en ce que** le système d'émission/réception (1, 2) est agencé sur l'extrémité ouverte du tube (9) s'étendant parallèlement au fond de récipient (4).

14. Dispositif selon l'une quelconque des revendications 4 à 12, **caractérisé en ce que** les signaux d'écho de la surface de référence (5) sont évalués pour la détermination de la nature du liquide.

15. Dispositif selon l'une quelconque des revendications 1 à 14, **caractérisé en ce que** les tubes (9, 10) sont réalisés conduisant les ultrasons.

16. Dispositif selon la revendication 1, **caractérisé en ce que** le boîtier (25) se compose de deux demi-coques coudées (21, 22).

17. Dispositif selon la revendication 1 ou 16, **caractérisé en ce que** deux espaces creux (18, 19) parallèles s'étendant dans l'extension longitudinale de boîtier sont formés dans le boîtier (25).

18. Dispositif selon la revendication 17, **caractérisé en ce qu'**un espace creux (18) sert sensiblement au guidage de son et l'autre espace creux (19) sert au guidage de câbles électriques.

19. Dispositif selon l'une quelconque des revendications 1 à 18, **caractérisé en ce que** le boîtier (25) est réalisé comme un boîtier coudé et le réflecteur (3) est agencé dans la partie de boîtier coudée.

20. Dispositif selon l'une quelconque des revendications 1 à 19, **caractérisé en ce que** le boîtier (25) est coudé de 90°.

21. Dispositif selon l'une quelconque des revendications 1 à 20, **caractérisé en ce qu'**un tube (9) du boîtier (25) est à agencer à peu près parallèlement au fond de récipient (4) et l'autre tube (10) du boîtier (25) s'étend à peu près perpendiculairement à celui-ci.

22. Dispositif selon l'une quelconque des revendications 1 à 21, **caractérisé en ce que** le réflecteur (3) présente une surface (20) réfléchissante déviant le sens de propagation respectif des impulsions d'émission ultrasonores et des signaux d'écho dans un angle de 90°.

23. Dispositif selon l'une quelconque des revendications 1 à 22, **caractérisé en ce que** les ondes ultrasonores qui sont dirigées sur la surface de référence (5) et qui y sont de nouveau réfléchies ont un sens de propagation à peu près parallèle au fond de récipient (4).

24. Dispositif selon l'une quelconque des revendications 1 à 23, **caractérisé en ce que** les signaux d'écho de la surface de référence (5) sont évalués pour la détermination de la nature du liquide.

25. Dispositif selon l'une quelconque des revendications 1 à 24, **caractérisé en ce que** les deux demi-coques (21, 22) sont reliées entre elles sur les surfaces de liaison par soudage, en particulier par soudage au laser.

26. Dispositif selon l'une quelconque des revendications 1 à 25, **caractérisé en ce que** les deux demi-coques (21, 22) sont reliées entre elles à l'aide de moyens d'encliquetage s'engageant de manière étanche l'un dans l'autre, s' étendant le long des surfaces de liaison (15, 16, 17).

27. Dispositif selon l'une quelconque des revendications 1 à 25, **caractérisé en ce que** le réflecteur (3) et la surface de référence (5) sont maintenus à complémentarité de formes sur la paroi intérieure de l'espace creux (18) dans le boîtier.
